# EUROPÄISCHE PATENTSCHRIFT

(11) **EP 0 368 228 B1**
(45) Veröffentlichungstag und Bekanntmachung des Hinweises auf die Patenterteilung: **20.09.1995**
(21) Anmeldenummer: 89120559.3
(22) Anmeldetag: 07.11.1989
(51) Int. Cl.: C08G 8/28, C09D 5/44

(54) **Kationisch modifizierte Novolake, Verfahren zu ihrer Herstellung und ihre Verwendung**
Cationic modified novolaks, method for their preparation and their use
Novolaques modifiés cationiquement, procédé de leur préparation et leur usage

(30) Priorität: 10.11.1988 DE 3838091
(43) Veröffentlichungstag der Anmeldung: 16.05.1990
(73) Patentinhaber: HOECHST AKTIENGESELLSCHAFT, 65926 Frankfurt am Main (DE)
(72) Erfinder: Hesse, Wolfgang, Dr., D-6204 Taunusstein (DE); Leicht, Erhardt, Dr., D-6238 Hofheim am Taunus (DE)

(56) Entgegenhaltungen:
- EP-A- 0 003 798
- EP-A- 0 197 458
- GB-A- 998 853
- US-A- 3 965 211
- PATENT ABSTRACTS OF JAPAN, Band 3, Nr. 138 (C-64), 16. November 1979 ; & JP-A-54117082
- PATENT ABSTRACTS OF JAPAN, Band 13, Nr. 562 (C- 665)(3910), 13. Dezember 1989; & JP - A - 1234471

## Beschreibung

Die Erfindung betrifft kationische Modifizierungsprodukte von Novolaken, die thermisch stabil gebundenen Stickstoff enthalten. Die Modifikation erfolgt durch Additionsreaktionen von Novolaken mit zumindest bifunktionellen Epoxidharzen und primären oder sekundären Aminen, die außerdem noch tertiäre Stickstoffatome enthalten können.

Es ist bekannt, Phenolharze und Epoxide unter Aminkatalyse mit einander umzusehen, vgl. GB-A-998853 und US-A-3965211. Es ist ferner bekannt, Phenol und Formaldehyd in Gegenwart von Aminen als Katalysator zu selbstvernetzenden Phenolharzen des Resoltyps umzusetzen. Dabei bleiben tertiäre Amine unverändert, sekundäre und primäre werden als Mannichbase an das Phenol gebunden. Beispiele sind Umsetzungprodukte von Phenol mit je 1, 2 und 3 Mol Formaldehyd und Dimethylamin zu Mono-, Di- und Tri-dimethylaminomethylenphenolen. Diese Verbindungen sind thermisch instabil. Die Instabilität wird durch die Gegenwart von sauren oder basischen Verbindungen erhöht. Genauso verhalten sich auch in nicht stöchiometrischen Verhältnissen hergestellte Phenolresole.

Phenolharze vom Novolaktyp werden aus Phenolen und Oxoverbindungen, in der Regel Aldehyden, insbesondere Formaldehyd, in Gegenwart von Säuren hergestellt. Werden bei der Synthese dieser Polyalkylidenpolyphenole Amine mitverwendet, so wird die Reaktion zwischen Phenol und Oxoverbindung entweder unterdrückt oder kein Amin gebunden oder das bei der Synthese, die in der Regel bei 100 bis 120°C stattfindet, gegebenenfalls gebundene Amin bei der Aufarbeitung zu phenolfreien Novolaken, die in der Regel bei Temperaturen zwischen 150 und 280°C, im Vakuum, oft unter Zuhilfenahme von Wasserdampf, erfolgt, wieder abgespalten. Das gleiche ist der Fall, wenn man in einem umständlichen, mehrstufigen Verfahren Novolak in Gegenwart von Aminen als Katalysator herstellt.

Die Abspaltung von aminischem Stickstoff aus Novolaken ist auch aus der Vernetzung von Novolaken mit Hexamethylentetramin bekannt. Diese spalten bei höheren Temperaturen, die über der Härtungstemperatur von etwa 150°C liegen, den Stickstoff als Ammoniak, Amine und in anderer Form ab und sind dann praktisch stickstofffrei. Die Spaltreaktion auch dieser Mannichbasen wird durch Säuren oder Basen katalysiert.

Thermisch stabile, von Ausgangsstoffen freie aminmodifizierte Novolake sind bis jetzt noch nicht beschrieben worden, obwohl solche Substanzen wegen ihrer kationischen Eigenschaften und ihrer Schadstofffreiheit viele neue Eigenschaften und Anwendungsmöglichkeiten erwarten lassen könnten.

Es wurde nun überraschenderweise gefunden, daß kationische Modifizierungsprodukte von Novolaken mit einem Stickstoffgehalt zwischen 0,02 und 6 Gew.-%, vorzugsweise zwischen 0,4 und 5 Gew.-%, bezogen auf die kationischen Modifizierungsprodukte, und einem Gehalt zwischen 1 und 70 Gew.-%, vorzugsweise zwischen 2 und 50 Gew.-%, bezogen auf die kationischen Modifizierungsprodukte, an Epoxidharz-Brücken, die aus ursprünglich zumindest bifunktionellen Epoxidverbindungen stammen, die in Brücken zwischen den phenolischen Hydoxylgruppen des Ausgangs-Novolaks und den Stickstoffatomen eines ursprünglich sekundären oder primären Amins und gegebenenfalls zusätzlichen Brücken zwischen phenolischen Hydroxylgruppen und/oder zwischen den Stickstoffatomen eines Amins, das vorzugsweise zusätzlich tertiäre Aminogruppen tragen kann, gebunden sind, thermisch stabile, kationische Kunstharze sind.

Diese lassen sich, ohne selbstvernetzend zu sein, ohne Zusätze von Katalysatoren mit einer Reihe von vernetzend wirkenden Substanzen, die bei nicht kationisch modifizierten Novolaken nicht wirken, zu hochmolekularen Körpern umsetzen, die sich auf vielfältige Weise, insbesondere als Überzüge, Formmassen, Klebstoffe, Kitte, verwenden lassen. Durch Protonisierung können sie zusätzlich wasserlöslich gemacht werden. Diese kationisch modifizierten Novolake können auch ohne Vernetzungsmittel verwendet werden und unterscheiden sich durch Vermittlungen neuer Eigenschaften von gewöhnlichen Novolaken.

Als Ausgangsstoffe bzw. Zwischenprodukte für die kationisch modifizierten Novolake dienen Amine, Epoxidverbindungen und Novolake. Als Novolake werden die Kondensationsprodukte von Oxoverbindungen und Phenolen, die gegenüber Oxoverbindungen mindestens bifunktionell sind, eingesetzt. Das Einstands-Molverhältnis von Phenolen und Oxoverbindungen kann in weiten Grenzen zwischen 1:0,05 bis 1:1,0, vorzugsweise zwischen 1:0,2 bis 1:1,0, variiert werden. Die Herstellung erfolgt auf übliche Weise. Die erhaltenen Novolake werden nach der Kondensation bei Temperaturen zwischen 150 bis 280°C, vorzugsweise im Vakuum, gegebenenfalls unter Zuhilfenahme von Wasserdampf, von den nicht umgesetzten Ausgangsstoffen befreit. Als Ausgangsstoffe für den Novolak werden Phenole, wie z.B. Phenol, Resorcin, Hydrochtnon, Brenzkatechin, Kresole und ihre Isomerengemische, p- und o-Monoalkylphenole mit Alkylresten von 2 bis 18 C-Atomen, verwendet. Statt der Alkylreste können Aralkylreste mit 8 bis 12 C-Atomen oder entsprechende Alkenylreste vorhanden sein. Bevorzugt sind Phenole oder Kresole oder p-Alkylphenole mit 3 bis 12 C-Atomen. Es können auch Gemische der genannten Phenole eingesetzt werden.

Als Oxoverbindungen werden vorzugsweise Aldehyde mit den Phenolen zum Novolak umgesetzt. Die Zahl der C-Atome in den Oxoverbindungen liegt vorzugsweise zwischen 1 und 12. Es können auch Gemische der Aldehyde eingesetzt werden. Besonders bevorzugt ist die Verwendung von Formaldehyd.

Die von ihren Ausgangsstoffen weitgehend oder vollständig befreiten Ausgangs-Novolake besitzen eine bevorzugte Molekularmasse im Zahlenmittel von 200 bis 2000, insbesondere von 305 bis 1500.

Als Epoxidverbindungen dienen z.B. solche wie Diepoxibutan oder Diepoxipolyalkylenoxide oder die Epoxidierungsprodukte von ungesättigten Verbindungen, z.B. von ungesättigten fetten Ölen oder ungesättigten Kohlenwasserstoffen. Bevorzugt sind die Umsetzungsprodukte von Bis- oder Polyalkylidenphenolen mit Epichlorhydrin, vorzugsweise die von Bisalkylidenphenolen, wie z.B. insbesondere von Diphenylolpropan, mit Epoxidäquivalentgewichten von vorzugsweise 43 bis 1000, insbesondere von 112 bis 750. Bevorzugt sind Epoxidverbindungen, die durch Reaktion von Bisphenolen mit Epichlorhydrin erhalten werden können. Es können auch Gemische verwendet werden.

Die zur kationischen Modifizierung dienenden Amine sind sekundäre oder primäre Amine mit Kohlenwasserstoffresten zwischen 1 und 18 C-Atomen. Sie können eine oder mehrere primäre oder sekundäre Aminfunktionen tragen. Bevorzugt sind solche Amine, die außerdem noch mindestens eine tertiäre Aminogruppe tragen. Besonders eignen sich solche Amine, deren tertiäre Aminogruppe zwei Methylgruppen trägt. Vorzugsweise genannt werden z.B. Dimethylaminopropylamin, Dimethylaminopropylmethylamin, Dimethylaminopropylhydroxyethylamin, Dimethylamino-butylamin. Es können auch Gemische verwendet werden.

Die Herstellung der kationisch modifizierten Novolake erfolgt z.B. durch gleichzeitige Umsetzung der drei genannten Ausgangs-Komponenten. Dabei ist es zweckmäßig, ein Gemisch aus Novolak(en) und Epoxidverbindungen vorzulegen und die Amine zulaufen zu lassen. Lösungsmittel können zugegen sein.

Bei der Durchführung der Herstellungsreaktion ist die Einhaltung von hohen Reaktionstemperaturen wesentlich. Es wurde nämlich überraschenderweise gefunden, daß sich kationisch modifizierte Novolake nur bei Einsatz geringer Mengen an Epoxidverbindungen und Aminen auch bei relativ niedrigen Temperaturen von ca. 60 bis 80°C synthetisieren lassen. Mit höheren Mengen an Epoxidverbindungen und Aminen aber, besonders bei Aminen mit hoher Basenstärke, wie z.B. den zusätzlich tertiäre Aminogruppen tragenden Aminen, gelieren die Ansätze bei Temperaturen zwischen 60 und 80°C. Erst die Erhöhung der Reaktionstemperatur in einen Bereich von 100 bis 200°C ermöglicht die Herstellung nicht vernetzter Harze mit solchen Gehalten an Aminen, die die Ausprägung kationischer Eigenschaften in den Vordergrund treten lassen. Bei gegebenem Ansatz fallen Viskosität und Schmelzpunkt des Reaktionsproduktes mit steigender Reaktionstemperatur. Dieses Verhalten war nicht vorhersehbar und stand im Gegensatz zum fachmännischen Wissen. Die Reaktionstemperaturen liegen daher vorzugsweise im Bereich von 60 bis 200°C, insbesondere von 100 bis 200°C, besonders bevorzugt von 120 bis 190°C.

Auch ohne Verwendung von Vernetzungsmitteln besitzen die erfindungsgemäß kationisch modifizierten Novolake wertvolle Eigenschaften als Zusätze zu Klebmassen auf Kautschukbasis. Für unpolare Kautschuke, wie z. B. Naturkautschuk, erhöhen die auf Basis von Alkylphenolen hergestellten und erfindungsgemäß kationisch modifizierten Novolake besonders die Klebrigkeit. In Klebmassen auf Basis von Polychloroprenklebstoff verbessern sie die offene Zeit, die Klebrigkeit und die Wärmefestigkeit. In polaren Kautschuken, wie z. B. Nitrilkautschuk und Polyurethankautschuk, können auch kationisch modifizierte Novolake aus nicht substituierten Phenolen verwendet werden. Hier werden insbesondere die Klebrigkeit und bei Polyurethankautschuk zusätzlich die Wärmefestigkeit positiv beeinflußt.

Die Vernetzung von kationisch modifizierten Novolaken mit den für nicht modifizierte Novolake üblichen Vernetzungsmitteln, wie z.B. Hexamethylentetramin, Phenolresolen, Melaminharzen usw., setzt die. Anwesenheit von Kernwasserstoffatomen am Phenolkern in Ortho- und/oder Parastellung in hinreichendem Maße voraus. Die Substitution der Novolake mit Alkylresten, wie sie bei der ausschließlichen Verwendung oder der Mitverwendung von Alkylphenolen erfolgt, setzt in beiden Fällen die Vernetzbarkeit herab oder verhindert sie. Dies vorausgesetzt, können kationisch modifizierte Novolake wie nicht modifizierte Novolake vernetzt werden. Gegenüber Hexamethylentetramin, Phenolresolen und Melaminharzen ist die Vernetzungsgeschwindigkeit aber stark erhöht. So können kationisch modifizierte Novolake vorteilhaft mit Hexamethylentetramin zur Erhöhung der Wärmefestigkeit in Nitrilkautschuk-Klebmassen eingesetzt werden.

Kationisch modifizierte Novolake können aber auch mit für gewöhnliche Novolake unbrauchbaren Substanzen unter Vernetzung reagieren. Für solche nachfolgend beschriebenen Reaktionen muß der Novolakrest keine reaktionsfähigen Kernwasserstoffatome tragen. Insbesondere mit Maleinsäure, Fumarsäure, Phthalsäureanhydrid und besonders bevorzugt mit Maleinsäureanhydrid vernetzen die kationisch modifizierten Novolake bei Temperaturen ab 120°C, vorzugsweise zwischen 140 bis 170°C.

Besondere Eignung als Vernetzungsmittel haben Epoxidverbindungen wie die bereits oben genannten. Die Vernetzung kann bereits bei Raumtemperatur oder darunter erfolgen. Der Zusatz von Katalysatoren ist nicht erforderlich. Die Erhöhung der Vernetzungstemperatur auf 120 bis 200°C, vorzugsweise 140 bis 180°C, beschleunigt die Vernetzung und vervollständigt sie.

Die Vernetzungen können in einer Stufe oder in Etappen erfolgen. Infolge günstiger Lage der Erweichungspunkte der modifizierten kationischen Novolake können mahlbare, rieselfähige und nichtblockende Sintermassen oder auch geformte Zwischenprodukte erhalten werden, die sich z.B. für Überzüge und Verklebungen oder als Bindemittel für pulverige oder faserige Substrate wie Reibbeläge oder Laminate, eignen. Die kationisch modifizierten Novolake und die Vernetzer können auch in Lösung oder Schmelze, z.B. für Kitte, angewandt werden. Für bestimmte Anwendungen, beispielsweise als Verstärkerharz für Gummi, können die kationisch modifizierten Novolake und ihre Vernetzer gleichzeitig oder nacheinander in das zu verstärkende Substrat eingemischt werden.

Kationisch modifizierte Novolake können durch Protonisierung wasserlöslich gemacht werden. Sie können zuvor in Lösung ohne Zusatz von Katalysatoren mit Formaldehyd zu selbstvernetzenden Phenolharzen umgesetzt werden. Dies ermöglich die Herstellung von wasserverdünnbaren Kunstharzlösungen, z.B. für Lacke, die gegebenenfalls durch Zusatz von üblichen Substanzen plastifiziert werden können. Die Lacke können auch ggf. gemeinsam mit den vorstehend genannten Vernetzungsmitteln kataphoretisch abgeschieden werden.

In den nachstehenden Beispielen bedeutet Teile (T) stets Gewichtsteile und % Gewichtsprozent. Die Synthesen werden in Glas- oder Metallreaktoren durchgeführt, die mit Heizung, Kühlung, Rührer, Thermostatisierung, Rückflußkühler, absteigenden Kühler und Vakuumeinrichtung ausgestattet sind.

### Beispiel 1

### Kationisch modifizierter Novolak

### 1.1 Herstellung eines Ausgangs-Novolaks aus Phenol und Formaldehyd

940 Teile Phenol, 9,4 Teile Oxalsäure und 500 Teile wäßriger Formaldehyd (30 %ig) werden 3 Stunden unter Rückfluß gekocht. Anschließend werden zunächst unter Normaldruck, dann unter Wasserstrahlvakuum - bis zu einer Sumpftemperatur von 220°C ansteigend - die flüchtigen Anteile entfernt. Diese Temperatur wird noch 1 Stunde gehalten. Es fallen 700 Teile eines Novolaks mit einem Schmelzpunkt von 48°C und einem Gehalt von 0,05 % an freiem Phenol an.

### 1.2 Umsetzung zum kationisch modifizierten Novolak

700 Teile des aus Beispiel 1.1 erhaltenen Ausgangs-Novolaks werden auf 150°C erwärmt, mit 161,4 Teilen eines flüssigen Epoxidharzes auf Basis von Diphenolpropan und Epichlorhydrin mit einer Viskositätszahl von 22000 mPa·s/25°C (gemessen 1:1 in Butylglykol) und einem Epoxidäquivalentgewicht von 190 (Beckopox EP 140 der Firma Hoechst AG) versetzt und 400 Teile Butylglykol als Lösungsmittel zugegeben. Bei 150°C läßt man auf einmal 21,7 Teile Dimethylaminopropylamin zulaufen. Dabei erhöht sich die Temperatur spontan auf 162°C. Bei dieser Temperatur rührt man noch 1 Stunde. Dann destilliert man, bis zu einer Sumpftemperatur von 210°C ansteigend, zunächst unter Normaldruck und dann unter Wasserstrahlvakuum das Lösungsmittel ab. Beide Fraktionen werden getrennt gesammelt. Beide Fraktionen sind aminfrei. Nach Abkühlen auf 160°C wird der Ansatz entleert. Es fallen 900 Teile eines modifizierten Novolaks an, der einen Kapillar-Erweichungspunkt (Fp) von 67°C und eine Viskositätzahl von 1350 mPa·s/20°C (1:1 in Butylglykol) aufweist. Der Rückstand des Harzes beträgt nach 1 Stunde bei 170°C 100 %.

### 1.3 Variation der Reaktionstemperatur

Die Reaktion zwischen Novolak, Epoxidharz und Amin wird wie unter Beispiel 1.2 beschrieben durchgeführt, jedoch mit der Abänderung, daß die Temperatur bei der Zugabe des Amins jeweils 60, 80, 100, 120 und 180°C beträgt.

Der 60°C-Ansatz geliert 30 Minuten nach Zugabe des Amins. Der 80°C-Ansatz geliert beim Aufarbeiten noch Entfernung von etwa 20 % des Lösungsmittels.

Die bei den anderen Temperaturen resultierenden Harzeigenschaften, wie der Kapillar-Erweichungspunkt (Fp) und die Viskositätszahl (mPa·s/20°C), gemessen 1:1 in Butylglykol, zeigt die nachstehende Tabelle 1:

**Tabelle 1**

| Temperatur bei der Aminzugabe (°C) | Fp. des Harzes (°C) | Viskositätszahl (mPa·s/20°C) |
|---|---|---|
| 100 | 70 | 2450 |
| 120 | 68 | 2000 |
| 180 | 68 | 1250 |

Das bei 150°C hergestellte Harz enthält nach Kjeldahl 0,69 % Stickstoff, berechnet wurde ein Gehalt von 0,67 % Stickstoff.

### Beispiel 2

### Kationisch modifizierter Novolak

### 2.1 Herstellung des nicht modifizierten Novolaks

940 Teile Phenol, 710 Teile wäßriger Formaldehyd (30 %ig) und 15 Teile Oxalsäure werden, wie in Beispiel 1.1 beschrieben, miteinander umgesetzt und aufgearbeitet. Im Reaktor verbleiben 888 Teile eines Novolaks mit einem Schmelzpunkt von 80°C, einer Viskosität von 1200 mPa·s (1:1 in Butylglykol) und einem Gehalt an freiem Phenol von 0,1 %.

### 2.2 Herstellung des kationisch modifizierten Novolaks

888 Teile des im Reaktor verbleibenden Novolaks des Beispiels 2.1, 205,2 Teile des in Beispiel 1.2 verwendeten Epoxidharzes und 27,5 Teile Dimethylaminopropylamin werden, wie in Beispiel 1.2 beschrieben, miteinander umgesetzt und aufgearbeitet. Es werden 1118 Teile eines kationisch modifizierten Novolaks mit einer Viskositätszahl von 12000 mPa·s/20°C (1:1 in Butylglykol) und einem Schmelzpunkt von 94°C erhalten.

### Beispiel 3

### Kationisch modifizierter Novolak, Variation der Reaktantenmengen

412 Teile des Novolaks aus Beispiel 1.1 werden mit wechselnden, aus nachstehender Tabelle 2 ersichtlichen Mengen des Epoxidharzes (Ep-Harz) aus Beispiel 1.2 und wechselnden Mengen Dimethylaminopropylamin (DMAPA) in Gegenwart von 280 Teilen Butylglykol wie in Beispiel 1,2, aber bei 120°C, hergestellt und anschließend, wie in Beispiel 1.2 beschrieben, aufgearbeitet. Die dabei erhaltenen Harzeigenschaften (Fp und Viskositätszahl) sind in der nachstehenden Tabelle 2 zusammengefaßt wiedergegeben.

**Tabelle 2**

| Bsp. Nr. | Anteil EP-Harz (Teile) | Anteil DMAPA (Teile) | Fp des modifizierten Harzes (°C) | Viskositätszahl (mPa·s/20°C) |
|---|---|---|---|---|
| 3.1 | 142,5 | 25,5 | 79 | 4900 |
| 3.2 | 285 | 25,5 | 80 | 4300 |
| 3.3 | 71,25 | 12,75 | 62 | 2400 |
| 3.4 | 142,5 | 12,75 | 77 | 3810 |

### Beispiel 4

### Kationisch modifizierter Novolak auf Basis von Parakresol

540 Teile Parakresol, 5,4 Teile Oxalsäure und 82,5 Teile Paraformaldehyd (91 %ig) werden 3 Stunden unter Rückfluß gekocht und anschließend, wie in Beispiel 1.1 beschrieben, aufgearbeitet. Es fallen 400 g eines Parakresolnovolaks mit einem Schmelzpunkt von 50°C an. Das Harz wird nach der Destillation in 234 Teilen Methoxypropanol gelöst, mit 81 Teilen des Epoxidharzes aus Beispiel 1.2 versetzt und der Mischung bei 150°C noch 11 Teile Dimethylaminopropylamin zugegeben. Es fallen 485 Teile eines modifizierten Novolaks mit einem Schmelzpunkt von 77°C und einer Viskositätszahl von 600 mPa·s/20°C (1:1 in Butylglykol) an.

### Beispiel 5

### Kationisch modifizierter Novolak

413,7 Teile eines Epoxidharzes auf der Basis von Diphenylolpropan und Epichlorhydrin mit einem Epoxidäquivalentgewicht von 950 (Beckopox EP 301 der Firma Hoechst AG) sowie 412 Teile des Novolaks aus Beispiel 1.1 werden in 276 Teilen Butylglykol gelöst und der Lösung bei 180°C noch 12,75 Teile Dimethylaminopropylamin zugegeben. Nach der Aufarbeitung des Reaktionsgemisches wie unter Beispiel 1.2 beschrieben werden 837 Teile eines kationisch modifizierten Novolaks mit einem Erweichungspunkt von 77°C und einer Viskositätszahl von 8200 mPa·s/20°C (1:1 in Butylglykol) erhalten.

### Beispiel 6

### Herstellung eines kationisch modifizierten Novolaks auf Basis von Nonylphenol

**6.1** 220 Teile para-iso-Nonylphenol, 33 Teile Paraformaldehyd (91 %ig) und 5 Teile Oxalsäure werden 5 Stunden bei Temperaturen zwischen 105 und 115°C kondensiert, bis nach 7 Stunden der Gehalt an nicht umgesetztem Formaldehyd 1,2 % beträgt. Dann wird der Ansatz am absteigenden Kühler bis zu einer Sumpftemperatur von 220°C zunächst unter Normaldruck erhitzt. Anschließend wird mit einer Vakuum-Wasserdampf-Destillation das nicht umgesetzte Nonylphenol aus dem Ansatz entfernt. Es verbleiben 212 Teile eines Nonylphenolnovolaks mit einem Schmelzpunkt von 62°C und einer Viskositäts zahl von 30 mPa·s/20°C (1:1 in Xylol).
**6.2** Zu der Harzschmelze aus Beispiel 6.1 werden nach Abkühlen auf 160°C 100 Teile Diethylbenzol technisch (Solvesso 200 der Firma Esso AG) und 27,3 Teile des Epoxidharzes aus Beispiel 1.2 zugegeben und bei 160°C 1,14 Teile Dimethylaminopropylamin zugesetzt. Nach Aufarbeitung des Reaktionsgemisches wie in Beispiel 1.2 beschrieben werden 238 Teile eines Harzes erhalten, welches bei einem Schmelzpunkt von 82°C eine Viskositätszahl von 77 mPa·s/20°C (1:1 in Xylol) aufweist.

### Beispiel 7

### Kationisch modifizierter Novolak auf Basis von Nonylphenol

212 Teile des aus Beispiel 6.1 erhaltenen und mit Nonylphenol modifizierten Novolaks werden geschmolzen und der auf 130°C erwärmten Schmelze zunächst 57 Teile des Epoxidharzes aus Beispiel 1.2 und anschließend 12,9 Teile Dibutylamin zugemischt. Der Ansatz wird nach 1/2-stündigem Rühren auf 160°C erhitzt und nach einer weiteren Stunde dem Reaktor entnommen. Es werden 280 Teile eines modifizierten Novolaks mit einem Schmelzpunkt von 80°C und einer Viskositätszahl von 92 mPa·s/20°C (1:1 in Xylol) erhalten.

### Beispiel 8

### Sinterharzmasse aus kationisch modifiziertem Novolak und Epoxidharz

3000 Teile eines Epoxidharzes auf der Basis von Diphenylolpropan und Epichlorhydrin mit einem Epoxidäquivalentgewicht von 830, einem Erweichungspunkt (Fp) von 74°C, einer Glasübergangstemperatur (T_{G}) von 55°C und einer Viskositätszahl von 510 mPa·s/20°C (40 %ig in Butyldiglykol) (Beckopox EP 303 der Firma Hoechst AG) sowie 600 Teile des modifizierten Novolaks aus Beispiel 1.2 werden grob gemahlen und das Gemisch in einem Laborextruder (Hersteller Firma Werner und Pfleiderer, Typ ZSK 28) bei einer Eingangstemperatur von 80°C und einer Ausgangstemperatur von 113°C mit einer Geschwindigkeit von 4 kg/Stunde extrudiert.

Das Extrudat wird auf eine Korngröße von 60 bis 80 µm gemahlen, gesiebt und elektrostatisch auf Bonderblech aufgetragen. Nach einer Einbrenndauer von 30 Minuten bei 170°C beträgt die Schichtdicke 60 µm. Der eingebrannte Lackfilm zeigt eine Erichsentiefung nach DIN 53156 von 10,0 mm und hält bei der Schlagprüfung nach ASTM D 2794 vorder- und rückseitig einer Belastung von 160 Inchpound stand. Der eingebrannte Lackfilm ist beständig gegen Butylacetat, Alkalien und Säuren. Die Glasübergangstemperatur (T_{G}) des eingebrannten Lackfilms liegt bei 115°C.

### Beispiel 9

### Kationisch modifizierte Novolake, Variation des Stickstoffgehaltes

**9.1** 412 Teile des in Beispiel 3 verwendeten Novolaks werden in 275 Teilen Butylglykol gelöst und mit 23,75 Teilen des Epoxidharzes aus Beispiel 1.2 sowie 3,2 Teilen Dimethylaminopropylamin wie in Beispiel 1.2 beschrieben umgesetzt und aufgearbeitet. In quantitativer Ausbeute erhält man einen Novolak mit einem Erweichungspunkt von 88°C und einer Viskositätszahl von 4400 mPa·s/20°C (1:1 in Butylglylkol).
**9.2** 412 Teile des in Beispiel 1.1 verwendeten Novolaks werden in 275 Teilen Butylglykol gelöst und mit 190 Teilen des Epoxidharzes aus Beispiel 1.2 sowie 25,5 Teilen Dimethylaminopropylamin aus Beispiel 9.1 umgesetzt und aufgearbeitet. In quantitativer Ausbeute erhält man ein Harz mit einem Erweichungspunkt von 77°C und einer Viskositätszahl von 3200 mPa·s/20°C (1:1 in Butylglykol).
**9.3 Vernetzung mit Epoxidharz, lacktechnische Prüfung**
   111,4 Teile des Novolaks aus Beispiel 9.1 bzw. 179,1 Teile des Novolaks aus Beispiel 9.2 bzw. 103 Teile des in Beispiel 2.2 verwendeten Novolaks aus Beispiel 2.1, welcher nicht modifiziert ist, werden 50 %ig in Butylglykol gelöst und diese Lösungen mit jeweils 190 Teilen des Epoxidharzes aus Beispiel 1.2 verrührt. Die erhaltenen Klarlacklösungen werden in einer Naßfilmstärke von 200 µm auf Glasplatten aufgezogen und die Lackfilme 30 Minuten auf 150°C erhitzt. Mit den Novolaken aus den Beispielen 9.1 und 9.2 fallen zäh-harte, gut vernetzte Lackfilme mit einer Glasübergangstemperatur (T_{G}) von 104 bzw. 102°C an, welche gegen Butylglykol länger als 24 Stunden beständig sind. Mit dem Novolak aus Beispiel 2.1 erfolgt keine Vernetzung, der Lackfilm bleibt schmierig.

### Beispiel 10

### Vernetzungsverhalten von kationisch modifizierten Novolaken im Vergleich zu nicht modifizierten Novolaken

Zum qualitativen und quantitativen Vergleich des Vernetzungsverhaltens von modifizierten kationischen Novolaken und zum weiteren Vergleich mit nicht modifizierten Novolaken werden der Novolak nach Beispiel 2.2 und sein Ausgangsnovolak jeweils mit den aus der nachstehenden Tabelle 3 ersichtlichen Vernetzersubstanzen in den angegebenen Gewichtsverhältnissen im Mörser verrieben und anschließend die B-Zeit (Minuten bzw. Sekunden) nach DIN 16916-2 bei 150°C gemessen. Ein waagerechter Strich in der Tabelle 3 bedeutet, daß keine Vernetzung stattfindet.

**Tabelle 3**

| Vernetzer | Gew.-Verhältnis Novolak:Vernetzer | B-Zeit bei 150°C | |
|---|---|---|---|
| | | Nach Bsp. 2.2 modifizierter Novolak | Ausgangs-Novolak |
| Hexamethylentetramin | 9 : 1 | 50 sec. | 3 min. |
| Hexamethoxymethylmelamin | 6 : 4 | 5 min. | 6 min. |
| Paraformaldehyd 91 %ig | 9 : 1 | 20 sec. | - |
| Trioxan | 9 : 1 | 1,5 min. | - |
| Maleinsäureanhydrid | 9 : 1 | 20 sec. | - |
| Fumarsäure | 9 : 1 | 1,8 min. | - |
| Phthalsäureanhydrid | 9 : 1 | 1,5 min. | - |

### Vergleichsbeispiel 1

### Novolak aus Phenol, Formaldehyd und Dimethylaminopropylamin als Katalysator

940 Teile Phenol und 18,8 Teile Dimethylaminopropylamin werden auf 100°C erhitzt und bei dieser Temperatur der Mischung innerhalb von 15 Minuten 243 Teile wäßriger, 37 %iger Formaldehyd zugetropft. 3 Stunden nach Beginn des Zulaufs von Formaldehyd beträgt der Formaldehydgehalt 0 %.

Es werden 300 Teile Xylol zugegeben und der Ansatz am Umlauf azeotrop entwässert. Dabei steigt d.e Temperatur auf 148°C. Es scheiden sich 205 Teile wäßrige Phase ab. Dann wird zunächst unter Normaldruck, dann unter Vakuum bei 200°C 1 Stunde destilliert.

Nach Abkühlen auf 160°C wird der Ansatz dem Reaktor entnommen. Es fallen 454 Teile eines Phenolnovolaks mit einer Viskosität von 560 mPa·s/20°C (50 %ig in Butylglykol) und einem Schmelzpunkt von 56°C an. Der Stickstoffgehalt nach Kjeldahl beträgt weniger als 0,05 %, er ist unter der Nachweisgrenze.

Wäre das Amin gebunden worden, so würde de Stickstoffgehalt des Harzes bei ca. 1 % liegen.

## Patentansprüche (Patentansprüche für folgende(n) Vertragsstaat(en): AT, BE, CH, DE, FR, GB, GR, IT, LI, LU, NL, SE)

1. Kationische Modifizierungsprodukte von Novolaken mit einem Stickstoffgehalt zwischen 0,02 und 6 Gew.-%, bezogen auf die kationischen Modifizierungsprodukte, und einem Gehalt zwischen 1 und 70 Gew.-%, bezogen auf die kationischen Modifizierungsprodukte, an Epoxidharz-Brücken, die aus ursprünglich zumindest bifunktionellen Epoxidverbindungen stammen, die in Brücken zwischen den phenolischen Hydoxylgruppen des Ausgangs-Novolaks und den Stickstoffatomen eines ursprünglich sekundären oder primären Amins und gegebenenfalls zusätzlichen Brücken zwischen phenolischen Hydroxylgruppen und/oder zwischen den Stickstoffatomen eines Amins, das zusätzlich tertiäre Aminogruppen tragen kann, gebunden sind.

2. Kationische Modifizierungsprodukte von Novolaken nach Anspruch 1, dadurch gekennzeichnet, daß der verwendete Ausgangs-Novolak ein von dessen Ausgangsstoffen weitgehend oder vollständig befreites Kondensationsprodukt eines gegenüber Oxo-Verbindungen mindestens zweiwertigen Phenols mit Oxo-Verbindungen, mit einem Zahlenmittel der Molekularmasse zwischen 200 bis 2000 war.

3. Kationische Modifizierungsprodukte von Novolaken nach Anspruch 1 und/oder 2, dadurch gekennzeichnet, daß die in Brücken gebundene Epoxidverbindung ein Epoxidäquivalentgewicht zwischen 43 und 1000 besaß und durch Reaktion eines Bis- oder Polyphenols mit Epichlorhydrin hergestellt wurde.

4. Kationische Modifizierungsprodukte von Novolaken nach einem oder mehreren der Ansprüche 1 bis 3, dadurch gekennzeichnet, daß das als Modifizierungsmittel verwendete Amin ein Diamin war, welches eine sekundäre oder primäre Aminfunktion und eine tertiäre Aminfunktion enthielt.

5. Verfahren zur Herstellung von kationisch modifizierten Novolaken nach einem oder mehreren der Ansprüche 1 bis 4, dadurch gekennzeichnet, daß der Ausgangs-Novolak, die Epoxidverbindung und das Amin bei Temperaturen zwischen 60 und 200°C, gegebenenfalls in Gegenwart von Lösungsmitteln, miteinander umgesetzt werden.

6. Verwendung kationischer Modifizierungsprodukte von Novolaken nach einem oder mehreren der Ansprüche 1 bis 4, bzw. erhalten nach Anspruch 5, als Zusatzkomponente für Formteile oder Klebstoffe auf Kautschukbasis.

7. Verwendung kationischer Modifizierungsprodukte von Novolaken nach einem oder mehreren der Ansprüche 1 bis 4, bzw. erhalten nach Anspruch 5, gemeinsam mit Vernetzungsmitteln aus der Gruppe Hexamethylentetramin, Paraformaldehyd, Trioxan, Maleinsäureanhydrid, Maleinsäure, Fumarsäure, Phthalsäureanhydrid, Epoxidharzen, Melaminharzen, Phenolharzen vom Resoltyp, zur Herstellung von Formkörpern, insbesondere Flächenbeschichtungen, Kitten, Klebverbindungen, härtbaren Form- oder Sintermassen, Reibbelägen, Laminaten.

8. Verwendung kationischer Modifizierungsprodukte von Novolaken nach einem oder mehreren der Ansprüche 1 bis 4, bzw. erhalten nach Anspruch 5, gegebenenfalls gemeinsam mit den in Anspruch 7 genannten Vernetzungsmitteln, zur Herstellung von Kunstharzlösungen, die nach Protonisierung wasserverdünnbar sind und vorzugsweise zu kataphoretischen Beschichtungen verwendet werden können.

## Patentansprüche (Patentansprüche für folgende(n) Vertragsstaat(en): ES)

1. Verfahren zur Herstellung kationischer Modifizierungsprodukte von Novolaken mit einem Stickstoffgehalt zwischen 0,02 und 6 Gew.-%, bezogen auf die kationischen Modifizierungsprodukte, und einem Gehalt zwischen 1 und 70 Gew.-%, bezogen auf die kationischen Modifizierungsprodukte, an Epoxidharz-Brücken, die aus ursprünglich zumindest bifunktionellen Epoxidverbindungen stammen, die in Brücken zwischen den phenolischen Hydoxylgruppen des Ausgangs-Novolaks und den Stickstoffatomen eines ursprünglich sekundären oder primären Amins und gegebenenfalls zusätzlichen Brücken zwischen phenolischen Hydroxylgruppen und/oder zwischen den Stickstoffatomen eines Amins, das zusätzlich tertiäre Aminogruppen tragen kann, gebunden sind, dadurch gekennzeichnet, daß der Ausgangs-Novolak, die Epoxidverbindungen und das Amin bei Temperaturen zwischen 60 und 200 °C, gegebenenfalls in Gegenwart von Lösungsmitteln, miteinander umgesetzt werden.

2. Verfahren nach Anspruch 1, dadurch gekennzeichnet, daß der verwendete Ausgangs-Novolak ein von dessen Ausgangsstoffen weitgehend oder vollständig befreites Kondensationsprodukt eines gegenüber Oxo-Verbindungen mindestens zweiwertigen Phenols mit Oxo-Verbindungen, mit einem Zahlenmittel der Molekularmasse zwischen 200 bis 2000 war.

3. Verfahren nach Anspruch 1 und/oder 2, dadurch gekennzeichnet, daß die für die Brückenbindungen verwendete Epoxidverbindung ein Epoxidäquivalentgewicht zwischen 43 und 1000 besaß und durch Reaktion eines Bis- oder Polyphenols mit Epichlorhydrin hergestellt wurde.

4. Verfahren nach einem oder mehreren der Ansprüche 1 bis 3, dadurch gekennzeichnet, daß das als Modifizierungsmittel verwendete Amin ein Diamin war, welches eine sekundäre oder primäre Aminfunktion und eine tertiäre Aminfunktion enthielt.

5. Verwendung kationischer Modifizierungsprodukte von Novolaken, erhalten nach einem oder mehreren der Ansprüche 1 bis 4, als Zusatzkomponente für Formteile oder Klebstoffe auf Kautschukbasis.

6. Verwendung kationischer Modifizierungsprodukte von Novolaken, erhalten nach einem oder menreren der Ansprüche 1 bis 4, gemeinsam mit Vernetzungsmitteln aus der Gruppe Hexamethylentetramin, Paraformaldehyd, Trioxan, Maleinsäureanhydrid, Maleinsäure, Fumarsäure, Phthalsäureanhydrid, Epoxidharzen, Melaminharzen, Phenolharzen vom Resoltyp, zur Herstellung von Formkörpern, insbesondere Flächenbeschichtungen, Kitten, Klebverbindungen, härtbaren Form- oder Sintermassen, Reibbelägen, Laminaten.

7. Verwendung kationischer Modifizierungsprodukte von Novolaken, erhalten nach einem oder mehreren der Ansprüche 1 bis 4 gegebenenfalls gemeinsam mit den in Anspruch 6 genannten Vernetzungsmitteln, zur Herstellung von Kunstharzlösungen, die nach Protonisierung wasserverdünnbar sind und vorzugsweise zu kataphoretischen Beschichtungen verwendet werden können.

## Claims (Claims for the following Contracting State(s): AT, BE, CH, DE, FR, GB, GR, IT, LI, LU, NL, SE)

1. Cationic modification products of novolaks having a content of nitrogen of between 0.02 and 6% by weight, relative to the cationic modification products, and a content of epoxide resin bridging units of between 1 and 70% by weight, relative to the cationic modification products, said epoxide bridging units being derived from originally at least divalent epoxide compounds which are bound in bridges between the phenolic hydroxyl groups of the starting novolak and the nitrogen atoms of an originally secondary or primary amine, and if appropriate additional bridging units between phenolic hydroxyl groups and/or between the nitrogen atoms of an amine which in addition may carry tertiary amino groups.

2. Cationic modification products of novolaks as claimed in claim 1, wherein the starting novolak used was a condensation product of a phenol, which is at least difunctional towards oxo compounds, and oxo compounds which condensation product has been largely or completely freed from its starting substances and has a number-average molecular weight of between 200 and 2000.

3. Cationic modification products of novolaks as claimed in either of claims 1 and 2, in which the epoxide compound bound in bridging units had an epoxide equivalent weight of between 43 and 1000 and had been prepared by reaction of a bis- or polyphenol with epichlorhydrin.

4. Cationic modification products of novolaks as claimed in any one of claims 1 to 3, in which the amine used as the modifying agent was a diamine which contained a secondary or primary amine function and a tertiary amine function.

5. A process for the preparation of cationically modified novolaks a claimed in any one of claims 1 to 4, which comprises reacting the starting novolak, the epoxide compound and the amine with one another at temperatures between 60 and 200 °C, if appropriate in the presence of solvents.

6. The use of cationic modification products of novolaks as claimed in any one of claims 1 to 4 or obtained as claimed in claim 5 as an additive component of rubber-based moldings or adhesives.

7. The use of cationic modification products of novolaks as claimed in any one of claims 1 to 4 or obtained as claimed in claim 5, together with crosslinking agents from the group comprising hexamethylenetetramine, paraformaldehyde, trioxane, maleic anhydride, maleic acid, fumaric acid, phthalic anhydride, epoxy resins, melamine resins or phenolic resins of the resol type for the production of shaped articles, in particular surface coatings, putties, adhesive joins, curable molding or sinter compositions, friction linings or laminates.

8. The use of cationic modification products of novolaks as claimed in any one of claims 1 to 4 or obtained as claimed in claim 5, if appropriate together with the crosslinking agents mentioned in claim 7, for the preparation of synthetic resin solutions which are water-dilutable after protonation and can preferably be used for cataphoretic coatings.

## Claims (Claims for the following Contracting State(s): ES)

1. A process for the preparation of cationic modification products of novolaks having a content of nitrogen of between 0.02 and 6% by weight, relative to the cationic modification products, and a content of epoxide resin bridging bonds of between 1 and 70% by weight, relative to the cationic modification products, said epoxide bridging units being derived from originally at least divalent epoxide compounds which are bound in bridges between the phenolic hydroxyl groups of the starting novolak and the nitrogen atoms of an originally secondary or primary amine, and if appropriate, additional bridging units between phenolic hydroxyl groups and/or between the nitrogen atoms of an amine which in addition may carry tertiary amino groups, characterized in that the starting novolak, the expoxide compounds and the amine are reacted with one another at temperatures between 60 and 200 °C, if appropriate in the presence of solvents.

2. The process as claimed in claim 1, wherein the starting novolak used was a condensation product of a phenol, which is at least difunctional towards oxo compounds, and oxo compounds which condensation product has been largely or completely freed from its starting substances and has a number-average molecular weight of between 200 and 2000.

3. The process as claimed in either of claims 1 and 2, in which the epoxide compound used for the bridging units had an epoxide equivalent weight of between 43 and 1000 and had been prepared by reaction of a bis- or polyphenol with epichlorhydrin.

4. The process as claimed in any one of claims 1 to 3, in which the amine used as the modifying agent was a diamine which contained a secondary or primary amine function and a tertiary amine function.

5. The use of cationic modification products of novolaks obtained as claimed in any one of claims 1 to 4 as an additive component of rubber-based moldings or adhesives.

6. The use of cationic modification products of novolaks obtained as claimed in any one of claims 1 to 4 together with crosslinking agents from the group comprising hexamethylenetetramine, paraformaldehyde, trioxane, maleic anhydride, maleic acid, fumaric acid, phthalic anhydride, epoxy resins, melamine resins or phenolic resins of the resol type for the production of shaped articles, in particular surface coatings, putties, adhesive joins, curable molding or sinter compositions, friction linings or laminates.

7. The use of cationic modification products of novolaks obtained as claimed in any one of claims 1 to 4, if appropriate together with the crosslinking agents mentioned in claim 6, for the preparation of synthetic resin solutions which are water-dilutable after protonation and can preferably be used for cataphoretic coatings.

## Revendications (Revendications pour l'(les) Etat(s) contractant(s) suivant(s): AT, BE, CH, DE, FR, GB, GR, IT, LI, LU, NL, SE)

1. Produits de modification cationique de novolaques ayant une teneur en azote comprise entre 0,02 et 6 % en poids par rapport aux produits de la modification cationique, et contenant de 1 à 70 % en poids, par rapport aux produits de la modification cationique, de ponts de résine époxyde, qui proviennent de composés époxydiques initialement au moins bifonctionnels, qui sont liés en des ponts entre les groupes hydroxyle phénoliques de la novolaque de départ et les atomes d'azote d'une amine initialement secondaire ou primaire, et éventuellement en ponts supplémentaires entre des groupes hydroxyle phénoliques et/ou entre des atomes d'azote d'une amine pouvant porter en outre des groupes amino tertiaires.

2. Produits de modification cationique de novolaques selon la revendication 1, caractérisés en ce que la novolaque de départ utilisée est un produit de condensation, complètement ou presque complètement débarrassé de ses substances de départ, d'un phénol au moins divalent par rapport à des composés oxo, avec de composés oxo, ayant une masse moléculaire moyenne en nombre comprise entre 200 et 2000.

3. Produits de modification cationique de novolaques selon la revendication 1 et/ou 2, caractérisés en ce que le composé époxydique, lié en ponts, a une masse équivalente d'époxyde comprise entre 43 et 1000 et a été préparé par la réaction d'un bisphénol ou d'un polyphénol avec de l'épichlorhydrine.

4. Produits de modification cationique de novolaques selon l'une ou plusieurs des revendications 1 à 3, caractérisés en ce que l'amine utilisée comme agent modifiant est une diamine qui contient une fonction amine primaire ou secondaire et une fonction amine tertiaire.

5. Procédé pour préparer des novolaques à modification cationique selon l'une ou plusieurs des revendications 1 à 4, caractérisé en ce qu'on fait réagir les uns avec les autres, à des températures comprises entre 60 et 200°C et éventuellement en présence de solvants, la novolaque de départ, le composé époxydique et l'amine.

6. Utilisation de produits de modification cationique de novolaques selon l'une ou plusieurs des revendications 1 à 4, ou obtenus selon la revendication 5, comme constituant additionnel pour objets moulés ou adhésifs à base de caoutchouc.

7. Utilisation de produits de modification cationique de novolaques selon l'une ou plusieurs des revendications 1 à 4 ou obtenus selon la revendication 5, en même temps que des agents de réticulation choisis parmi l'ensemble comprenant l'hexaméthylènetétramine, le paraformaldéhyde, le trioxanne, l'anhydride maléique, l'acide maléique, l'acide fumarique, l'anhydride phtalique, les résines époxydes, les résines de mélamine, les résines phénoliques du type résol, pour la préparation d'objets moulés, en particulier de revêtements superficiels, de mastics, d'assemblages collés, de compositions durcissables moulables ou frittables, de garnitures de friction, de stratifiés.

8. Utilisation de produits de modification cationique de novolaques selon l'une ou plusieurs des revendications 1 à 4 ou obtenus selon la revendication 5, éventuellement en même temps que les agents de réticulation mentionnés dans la revendication 7, pour préparer des solutions de résine qui, après protonation, sont diluables à l'eau, et qui peuvent être utilisées de préférence pour des revêtements par cataphorèse.

## Revendications (Revendications pour l'(les) Etat(s) contractant(s) suivant(s): ES)

1. Procédé pour préparer des produits de modification cationique de novolaques ayant une teneur en azote comprise entre 0,02 et 6 % en poids par rapport aux produits de modification cationique, et contenant de 1 à 70 % en poids, par rapport aux produits de modification cationique, de ponts de résine époxyde, qui proviennent de composés époxydiques initialement au moins bifonctionnels, qui sont liés en des ponts entre les groupes hydroxyle phénoliques de la novolaque de départ et les atomes d'azote d'une amine initialement secondaire ou primaire, et éventuellement en ponts supplémentaires entre des groupes hydroxyle phénoliques et/ou entre des atomes d'azote d'une amine pouvant porter en outre des groupes amino tertiaires, caractérisé en ce que la novolaque de départ, les composés époxydiques et l'amine sont mis à réagir les uns avec les autres à des températures comprises entre 60 et 200°C, éventuellement en présence de solvants.

2. Procédé selon la revendication 1, caractérisé en ce que la novolaque de départ utilisée est un produit de condensation, complètement ou presque complètement débarrassé de ses substances de départ, d'un phénol au moins divalent par rapport à des composés oxo, avec de composés oxo, ayant une masse moléculaire moyenne en nombre comprise entre 200 et 2000.

3. Procédé selon la revendication 1 et/ou 2, caractérisé en ce que le composé époxydique, lié en ponts, a une masse équivalente d'époxyde comprise entre 43 et 1000 et a été préparé par la réaction d'un bisphénol ou d'un polyphénol avec de l'épichlorhydrine.

4. Procédé selon l'une ou plusieurs des revendications 1 à 3, caractérisé en ce que l'amine utilisée comme agent modifiant est une diamine qui contient une fonction amine primaire ou secondaire et une fonction amine tertiaire.

5. Utilisation de produits de modification cationique de novolaques obtenus selon l'une ou plusieurs des revendications 1 à 4, comme constituant additionnel pour objets moulés ou adhésifs à base de caoutchouc.

6. Utilisation de produits de modification cationique de novolaques obtenus selon l'une ou plusieurs des revendications 1 à 4, en même temps que des agents de réticulation choisis parmi l'ensemble comprenant l'hexaméthylènetétramine, le paraformaldéhyde, le trioxanne, l'anhydride maléique, l'acide maléique, l'acide fumarique, l'anhydride phtalique, les résines époxydes, les résines de mélamine, les résines phénoliques du type résol, pour la préparation d'objets moulés, en particulier de revêtements superficiels, de mastics, d'assemblages collés, de compositions durcissables moulables ou frittables, de garnitures de friction, de stratifiés.

7. Utilisation de produits de modification cationique de novolaques, obtenus selon l'une ou plusieurs des revendications 1 à 4, éventuellement en même temps que les agents de réticulation mentionnés dans la revendication 6, pour préparer des solutions de résine qui, après protonation, sont diluables à l'eau, et qui peuvent être utilisées de préférence pour des revêtements par cataphorèse.
